# EUROPEAN PATENT APPLICATION

(11) **EP 1 860 843 A2**
(43) Date of publication of application: **28.11.2007**
(21) Application number: 07108412.3
(22) Date of filing: 17.05.2007
(51) Int. Cl.: H04L 29/06

(54) **Connection adapter for communication device**

(30) Priority: 23.05.2006 JP 2006142519
(71) Applicant: Sanden Corporation, Isesaki-shi, Gunma 372-8502 (JP)
(72) Inventor: Iwazaki, Wataru, Isesaki-shi Gunma 372-8502 (JP); Kuwabara, Yasuyuki, Isesaki-shi Gunma 372-8502 (JP)
(74) Representative: Haley, Stephen

(57) **Abstract**

A connection adapter (1) is arranged to intervene between a communication device (20) for connection to a radio packet communication network (40) and high-level equipment (10) which performs communication via the communication device (20). The connection adapter (1) controls to switch the communication speed of the communication device (20) on the radio packet section, based on radio wave condition detected by the communication device (20) and/or the length of IP packets transmitted from the high-level equipment (10).

## Description

The present invention relates to the field of telemetering used for such purposes as collection of sales information from vending machines and to the field of telematics used for distribution of traffic information to mobile objects and like purposes. More particularly, the present invention relates to a connection adapter for connecting a communication device used in these fields to high-level equipment that uses the communication device.

Today, telemetering and telematics techniques by which information is collected or distributed via radio packet communication networks are in increasingly extensive use. Telemetering used to be a generic term referring to mechanisms for reading measurements by measuring instruments using a communication line. It now finds a broader range of reference, covering not only reading of data but also the monitoring of operation or remote control of devices. Typical applications of telemetering include sales management systems for vending machines, consumption management systems for gas, water and other utilities, and management systems for unmanned parking lots. For an example of sales management systems for vending machines, reference may be made to Japanese Patent Publication 2003-51056. Telematics means real-time supply of information services to mobile objects such as vehicles in combination with a communication system. Typical applications of telematics include a vehicle-mounted information system for providing traffic information, navigation information and the like in real time to terminals installed on automobiles.

Techniques in these fields require a communication device for connection to a radio packet communication network at a remote location and high-level equipment that uses the communication device. The high-level equipment corresponds to DTE (Data Terminal Equipment), and the communication device, to DCE (Data Circuit-terminating Equipment).

In a sales management system for vending machines, for example, a control device for controlling sales actions or the inside temperature corresponds to the high-level equipment. Each unit of high-level equipment is connected to a predetermined network via a communication device regularly or at random timing and is connected to a predetermined management computer via the network. The high-level equipment connected to the management computer transmits various sets of data on the objects to be controlled.

In a radio packet communication network, services that can be communicated at any of a number of communication speeds may be provided. In such a case, the communication device is also capable of supporting a number of communication speeds. Switching of the communication device is controlled by Data Terminal Equipment that is connected to the communication device.

However, switching the communication device to a high-speed communication mode does not always enhance the communication speed between the high-level equipment and the management computer and even decreases the communication speed in some situations. This can be ascribed to various factors, such as radio wave condition, the characteristics of the radio packet communication network and so forth.

An object of the invention is to improve the throughput of communication that uses a radio packet communication network.

To attain the object, the present application proposes a connection adapter for communication devices, comprising: a first interface for connection to a communication device for use in a radio packet communication network; a second interface for connection to high-level equipment which performs communication utilizing TCP/IP by using said communication device; a connection controller which controls the connection between said high-level equipment and said radio packet communication network; and a communication controller which relays communication by said high-level equipment using said communication device; wherein said communication controller monitors radio wave condition detected by the communication device and controls the communication device to switch the communication speed in the radio packet communication network based on the radio wave condition. As an example of specific aspects of the present invention, the present application proposes the connection adapter for communication devices, wherein said communication controller controls the communication device to increase the communication speed when radio field intensity is equal to or greater than a predetermined value.

The present application also proposes a connection adapter for communication devices, comprising: a first interface for connection to a communication device for use in a radio packet communication network; a second interface for connection to high-level equipment which performs communication utilizing TCP/IP by using said communication device; a connection controller which controls the connection between said high-level equipment and said radio packet communication network; and a communication controller which relays communication by said high-level equipment using said communication device; wherein said communication controller monitors the length of IP packets transmitted from the high-level equipment to the radio packet communication network and controls the communication device to switch the communication speed in the radio packet communication network based on the packet length. As an example of specific aspects of the present invention, the present application proposes the connection adapter for communication devices, wherein said communication controller controls the communication device to increase the communication speed when the packet length is equal to or greater than a predetermined value.

According to these aspects of the invention, since communication speed is controlled based on factors that affect the communication speed, such as radio wave condition and the length of IP packets, it is possible to optimize the communication speed.

The present application further proposes a connection adapter for communication devices, comprising: a first interface for connection to a communication device for use in a radio packet communication network; a second interface for connection to high-level equipment which performs communication utilizing TCP/IP by using said communication device; a connection controller which controls the connection between said high-level equipment and said radio packet communication network; a communication controller which relays communication by said high-level equipment using said communication device; and a storage which temporarily stores IP packets to be transmitted to the radio packet communication network from the high-level equipment; wherein said communication controller, when the length of an IP packet stored in said storage is equal to or greater than a predetermined value, delivers the IP packet to the radio packet communication network, and when the length of the IP packet is less than the predetermined value, concatenates the IP packet and one or more other IP packets stored in said storage so that the length of the concatenated packet is equal to or greater than the predetermined value, and delivers the concatenated IP packet to the radio packet communication network.

According to the invention, since IP packets delivered onto the radio packet communication network are ensured to have packet lengths equal to or greater than the predetermined value, communication efficiency is enhanced, which can thereby optimize the communication speed.

One method for the IP packet concatenation processing described above is to concatenate IP packets so that the packet length of the concatenated IP packet will be the maximum within the MTU (Maximum Transmission Unit) for the radio packet communication network. Another method of IP packet concatenation processing is to concatenate a predetermined number of IP packets.

Other objects, configurative aspects, and advantages of the invention will become apparent from the following detailed description.
Fig. 1 shows the configuration of a communication system;
Fig. 2 shows the configuration of a connection adapter;
Fig. 3 illustrates an example of setting information in the connection adapter;
Fig. 4 illustrates the sequence for a case where communication is started from high-level equipment;
Fig. 5 illustrates address conversion processing;
Fig. 6 illustrates the sequence for a case where communication is started from a management computer;
Fig. 7 illustrates the sequence for a case communication is started from the management computer;
Fig. 8 illustrates address conversion processing;
Fig. 9 is a flowchart illustrating communication control in a first embodiment;
Fig. 10 is a flowchart illustrating communication control in a second embodiment;
Fig. 11 is a flowchart illustrating communication control in a third embodiment;
Fig. 12 is a flowchart illustrating communication control in a fourth embodiment; and
Fig. 13 is a flowchart illustrating communication control in a fifth embodiment.

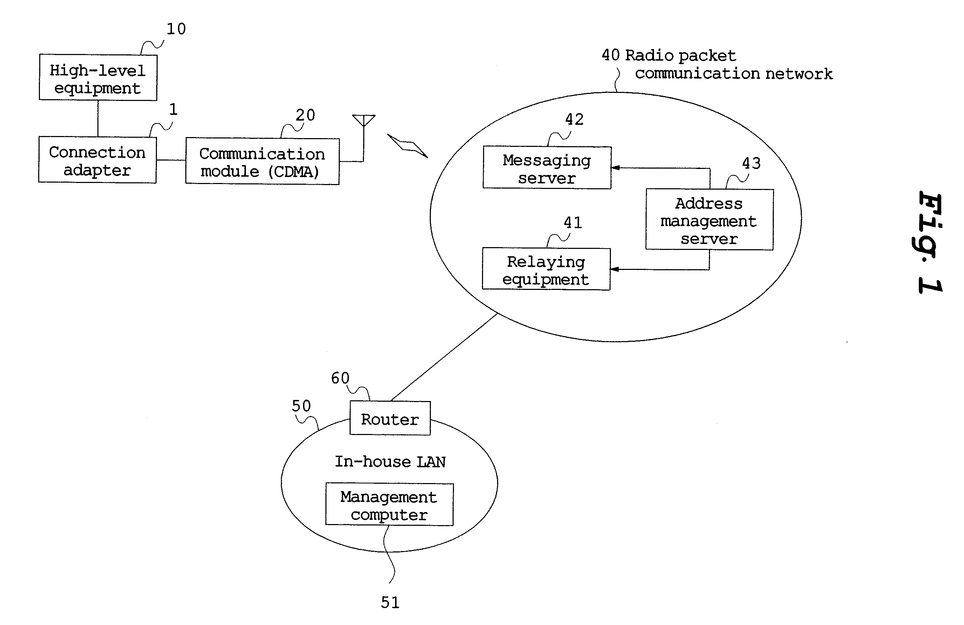

A communication system according to a first embodiment of the invention will be described with reference to drawings. Fig. 1 shows a configuration of a telemetering system that uses the communication system according to the invention.

As shown in Fig. 1, this system provides a network environment in which high-level equipment 10, which may be a computer for sewage flow rate monitoring, for example, is connected with an in-house LAN 50 via a radio packet communication network 40.

It is supposed here that the high-level equipment 10 and a terminal on the in-house LAN 50 (a management computer 51 in the example of Fig. 1) are set for use for a network connection service that assigns IP addresses in a fixed manner. On the other hand, the radio packet communication network 40 is supposed to provide another network service that dynamically assigns IP addresses. According to the invention disclosed by the present application, a connection adapter 1 is arranged to intervene between the high-level equipment 10 and a communication module 20, and this connection adapter 1 absorbs differences in network environments.

The high-level equipment 10 corresponds to DTE (Data Terminal Equipment). The high-level equipment 10 is designed to match a specific carrier and a network connection service provided by that carrier. More specifically, it presupposes the use of a network connection service which assigns a fixed IP address to each connection terminal. The high-level equipment 10 is also designed to be connected to a communication module matching the service and to match a connection protocol, an authentication protocol and the like matching that service.

The network connection service which the high-level equipment 10 presupposes will be described. In this network connection service, a telephone number is allocated in advance to each communication module by the carrier. The radio packet communication network provided by the network connection service is provided with relaying equipment which performs connection control, packet relaying and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as the in-house LAN. Connection to the relaying equipment is permitted only from a communication module to which a telephone number is allocated in advance.

This invention presupposes the use of such high-level equipment 10 and the management computer 51 as they are, and allows architecting of a network system even in the radio packet communication network 40 in which a network connection service that assigns dynamic IP addresses is provided.

Next, the network connection service that assigns dynamic IP addresses and is used in this embodiment of the invention will be described. In this network connection service, a telephone number is allocated to the communication module 20 in advance by the carrier. As shown in Fig. 1, the radio packet communication network 40 is provided with relaying equipment 41 that performs connection control, packet relaying and so forth. A terminal having the communication module 20 is connected to the radio packet communication network 40 by designating a predetermined special number and initiating a call to that number. This terminal is made connectable to the in-house LAN 50, the network to which it is to be connected, by performing authentication processing with the relaying equipment 41 using PAP (Password Authentication Protocol). In the PAP authentication, the network to be connected is specified by including information which specifies the destination of connection in a user name. In this network connection service, a group of IP addresses in a predetermined range are allocated to the radio packet communication network 40 by the carrier. An IP address included in the group of IP addresses is dynamically allocated to each communication module 20 by IPCP (Iternet Protocol Control Protocol).

The IP address assigned to the connection terminal is a predetermined one. As shown in Fig. 1, an address management server 43 is disposed in the radio packet communication network 40. This address management server 43 manages a list of telephone numbers of connection terminals and IP addresses that are distributed to the terminals having those telephone numbers. Specifically, the address management server 43 is provided with an address matching table that states the relationship of matching between the telephone numbers and the IP addresses. This address management server 43 also provides users with interfaces for updating the address matching table.

In this connection service, the radio packet communication network 40, when a terminal comes into connection, acquires a telephone number of the connection terminal. The network 40 then acquires an IP address matching that telephone number from the address matching table, and distributes the acquired IP address to the connection terminal. This address distribution uses the IPCP. Thus in this embodiment, though it uses the IPCP which is a dynamic IP assigning technique, the IP address distributed is a predetermined one.

Also, this connection service provides a service that can be communicated at a number of communication speeds switchable within the section of the radio packet communication network 40. The communication module 20 for connection to the radio packet communication network 40 is accordingly capable of switching the communication speed within the section of the radio packet communication network 40. In this embodiment, the communication module 20 has a setting item called "high-speed communication option". More specifically, when the option is turned on, the communication speed in the radio packet communication network 40 is set to 64 kbps for uplink and 144 kbps for downlink. When the option is turned off, the communication speed is set to 9.6 kbps for both uplink and downlink. The high-speed communication option can be switched by the connection adapter 1 connected to the communication module 20.

Also, in this connection service, the radio packet communication network 40 receives from the in-house LAN 50 an IP packet destined for the IP address matching the terminal and, when the terminal is not connected to the radio packet communication network 40, a messaging server 42 transmits a message. More specifically, the messaging server 42 acquires from the address management server 43 a telephone number matching the received IP packet, and transmits the message to that telephone number. This messaging service is not a network connection service using TCP/IP, but is implemented by a unique protocol utilizing the radio communication network. This enables the terminal to recognize the receipt of a connection request from the in-house LAN 50.

Next, the connection adapter 1 will be described in detail. This connection adapter 1 is intended to connect the high-level equipment 10, which corresponds to Data Terminal Equipment, and the communication module 20, which corresponds to DCE (Data Circuit-terminating Equipment). The connection adapter 1 of this embodiment matches the communication module 20 of the CDMA (Code Division Multiple Access) standards. The communication module 20 is a communication device for connecting to the radio packet communication network 40 and matches the communication standards, the communication protocol and service defined by the carrier on its own.

The high-level equipment 10 of this embodiment is supposed to permit direct connection to a communication module of the PDC (Personal Digital Cellular) standards and a communication module of the PHS (Personal Handy-phone System) standards. It is further supposed to be made connectable to the in-house LAN 50 via each radio packet communication network using these communication modules. The connection adapter 1 of this embodiment is made connectable to the in-house LAN 50 via the radio packet communication network 40 using the communication module 20 of the CDMA standards without requiring remodeling or altering of the high-level equipment 10. The connection adapter 1 will be described in further detail below.

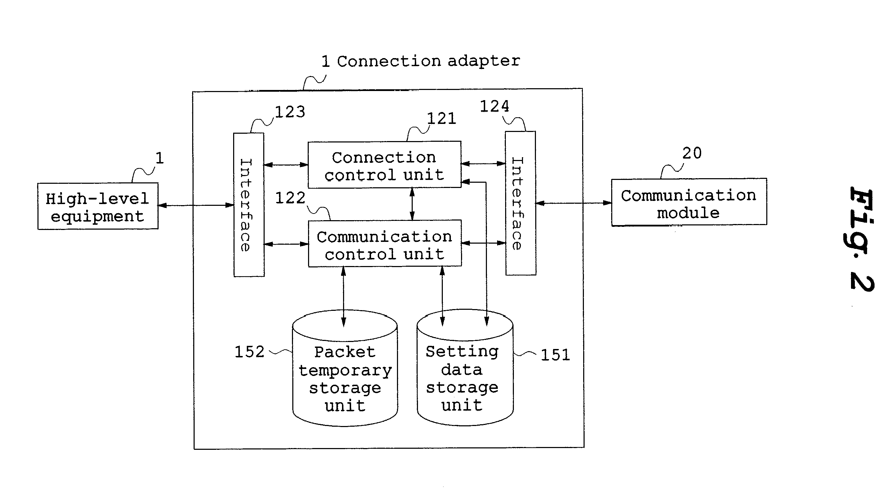

A configurative diagram of the connection adapter 1 of this embodiment will be described with reference to Fig. 2. Fig. 2 shows a functional block diagram of the connection adapter 1. Only those configurative elements relevant to the essentials of the invention are stated here, with other elements omitted.

As shown in Fig. 2, the connection adapter 1 is provided with a connection control unit 121 for performing connection control such as establishment of line connection, a communication control unit 122 for controlling data communication over a connection established by the connection control unit 121, an interface 123 for interfacing with the high-level equipment 10, an interface 124 for interfacing with the communication module 20, a setting data storage unit 151 in which various setting data are stored, and a packet temporary storage unit 152 for temporarily storing packets. The connection control unit 121 performs line connection control by AT commands and IP layer connection control by LCP (Link Control Protocol) and IPCP. The communication control unit 122 performs processing of conversion of IP addresses contained in the headers of the IP layer, processing of proxy response regarding TCP packets, control of communication speed in the radio communication section and so forth in data communication over the connection established by the connection control unit 121.

The connection control unit 121 and the communication control unit 122 subject data between the high-level equipment 10 and the communication module 20 to processing of conversion, transmission, discarding and other manners of processing in accordance with predetermined rules. The data necessary for these manners of data processing are stored in the setting data storage unit 151.

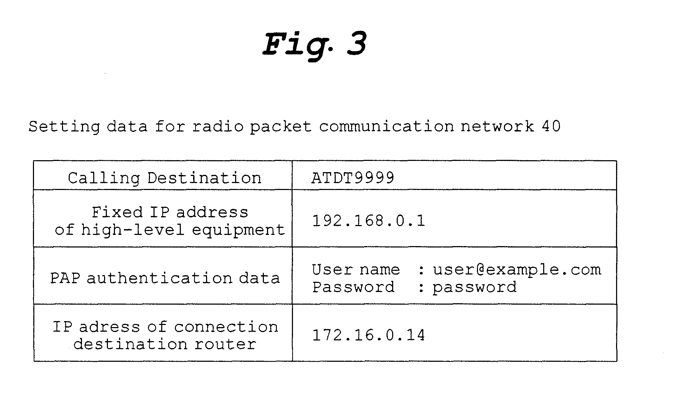

The data stored in the setting data storage unit 151 will be described with reference to Fig. 3. As shown in Fig. 3, the setting data storage unit 151 has stored therein call initiation commands (including telephone numbers) for connection to the radio packet communication network 40, the fixed IP address of the high-level equipment 10, authentication data that is necessary at the time of connection to the radio packet communication network 40, and the IP address of a router 60 which is the destination of connection. The setting data storage unit 151 is formed of a nonvolatile memory, such as an EPROM, for example.

The packet temporary storage unit 152 is FIFO buffer memory for temporarily storing packets received from the high-level equipment 10. The packet temporary storage unit 152 is formed of a storage medium, such as a RAM, for example.

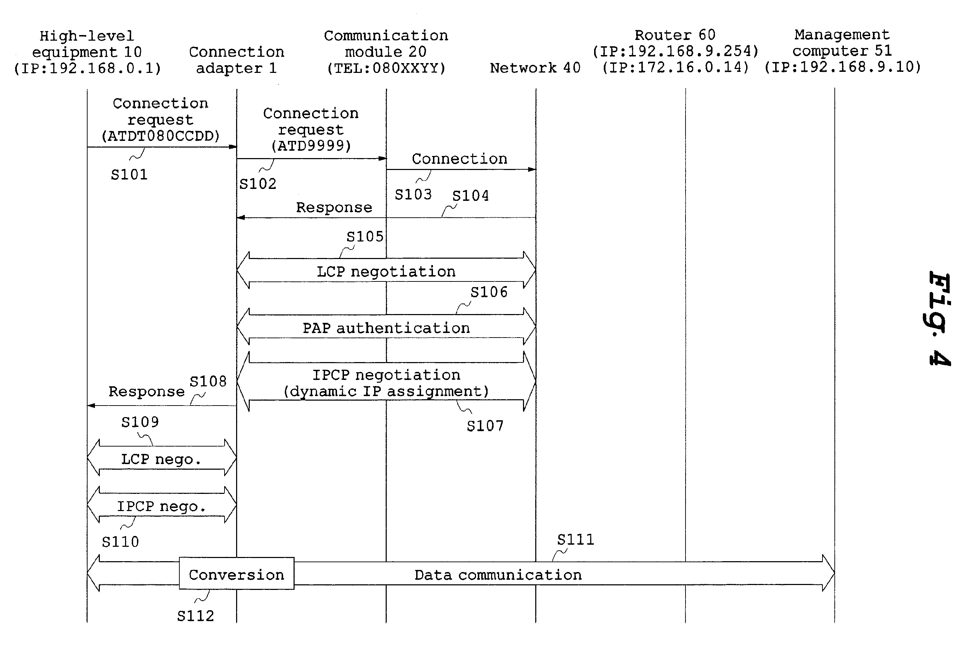

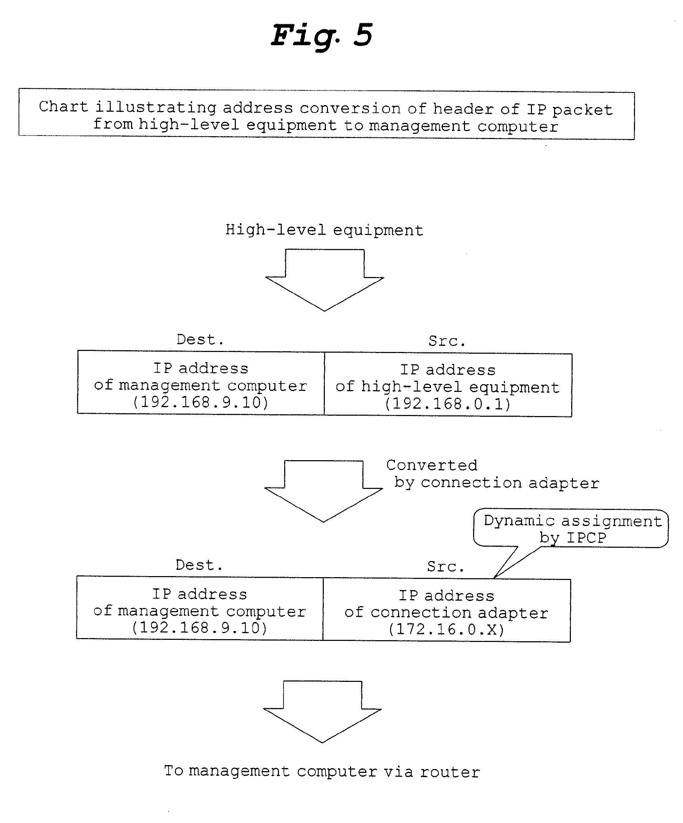

Next, the communication procedure in this system will be described with respect to drawings. First, a case of starting communication from the high-level equipment 10 to the management computer 51 will be described with reference to Fig. 4 and Fig. 5. Fig. 4 is a sequence chart showing a case of starting communication from the high-level equipment to the management computer; and Fig. 5 illustrates the conversion process of an IP address stated in the header of an IP packet transmitted from the high-level equipment.

As shown in Fig. 4, when the high-level equipment 10 initiates a call to the connection adapter 1 with an "ATDT080CCDD" command (step S101), the connection control unit 121 of the connection adapter 1 converts the command into "ATD9999" and transfers it to the communication module 20 (step S102). This call initiation may be triggered by the generation of an IP packet having a destination address of 192.168.9.10 as shown in Fig. 5, for example. The AT command causes the communication module 20 to initiate a call to the relaying equipment 41 in the radio packet communication network 40 (step S103). Upon receiving a response "CONNECT" to the effect that connection has been completed at the line level via the communication module 20 (step S104), the connection control unit 121 of the connection adapter 1 starts processing to connect the connection adapter 1 to the in-house LAN 50 by PPP (Point-to-Point Protocol).

First, the connection control unit 121 of the connection adapter 1 starts an LCP negotiation with the relaying equipment 41 of the radio packet communication network 40 (step S105). Next, the connection control unit 121 of the connection adapter 1 processes PAP authentication with the relaying equipment 41 of the radio packet communication network 40 (step S106). This PAP authentication, through it is not supposed for the high-level equipment 10, is necessary when the radio packet communication network 40 pertaining to this embodiment is to be used. Therefore in this embodiment, the connection adapter 1 performs the authentication on behalf of the high-level equipment 10. Upon completion of this authentication processing, the connection control unit 121 of the connection adapter 1 starts an IPCP negotiation between the connection adapter 1 and the relaying equipment 41 of the radio packet communication network 40 (step S107). This results in completion of the IPCP negotiation, and a dynamic IP address of 172.16.0.X is assigned to the connection control unit 121 of the connection adapter 1 from the radio packet communication network 40. The IP address assigned here is predetermined for the communication module 20, which is a connection terminal. The assigned dynamic IP address is stored in storage means such as an EPROM (not shown).

Upon completion of the PPP negotiation, the connection control unit 121 transmits to the high-level equipment 10 a response "CONNECT" to the effect that connection has been completed at the line level (step S108). Having received the response, the high-level equipment 10 starts an LCP negotiation and an IPCP negotiation (steps S109 and S110). A point to be noted here is that the connection control unit 121 of the connection adapter 1 responds to the high-level equipment 10.

As the foregoing processing completes the connection between the high-level equipment 10 and the in-house LAN 50, the high-level equipment 10 starts data communication to the management computer 51 (step S111). Hereupon, the communication control unit 122 of the connection adapter 1 performs address conversion of the header of the IP packet (step S112). More specifically, as shown in Fig. 5, the fixed terminal IP address (192.168.0.1) and the dynamic terminal IP address (172.16.0.X) are converted into each other. This processing makes possible communication with the management computer 51 started from the high-level equipment 10.

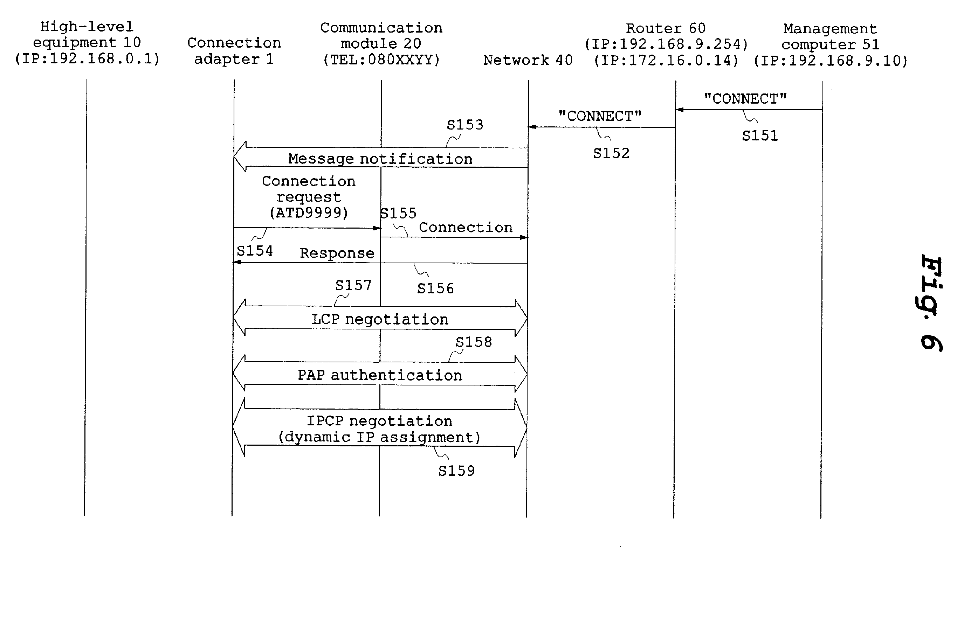

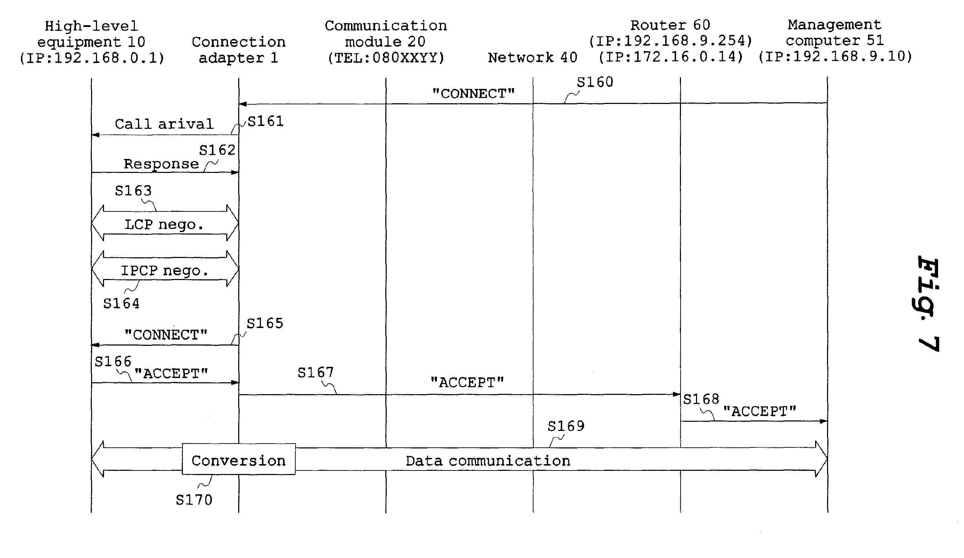

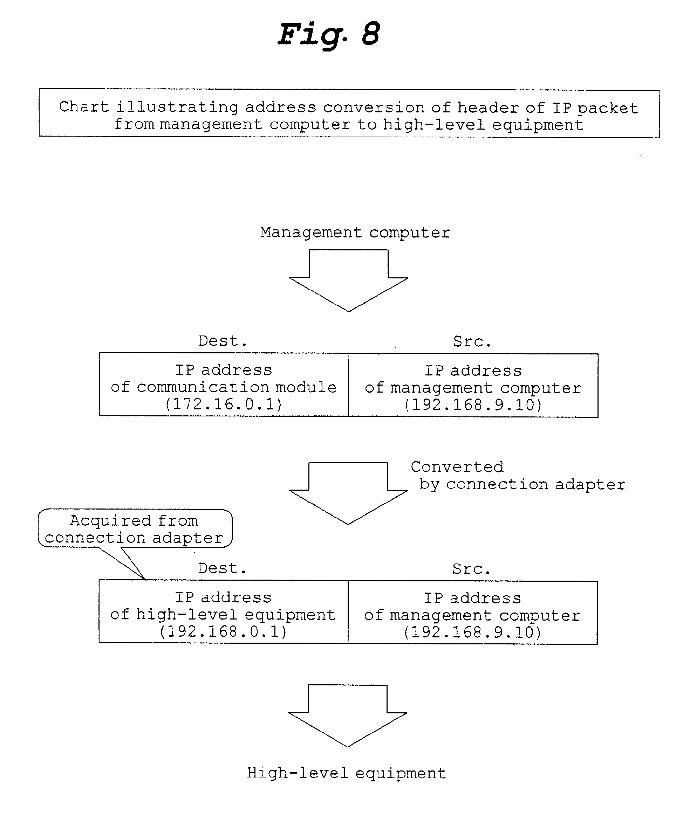

Next, a case where communication is started from the management computer 51 of the in-house LAN 50 to the high-level equipment 10 will be described with reference to Fig. 6 through Fig. 8. Figs. 6 and 7 are sequence diagrams showing communication started from the management computer, and Fig. 8 illustrates the process of address conversion.

It is supposed here that the address management server 43 has allocated an IP address of "172.16.0.1" to the communication module 20 connected to the high-level equipment 10.

When the management computer 51, in order to communicate with the high-level equipment 10 which is the communication destination, issues a connection request destined for the IP address "172.16.0.1" of the communication module 20 connected to the high-level equipment 10 (step S151), the router 60 relays the packet to the radio packet communication network 40 according to usual routing rules (step S152).

The radio packet communication network 40 references the destination IP address of the packet received from the router 60 and acquires a telephone number matching the IP address from the address management server 43. Then, the radio packet communication network 40 notifies the holder of the telephone number of the receipt of a connection request from the in-house LAN 50 by using a messaging service (step S153). The radio packet communication network 40 discards the packet pertaining to the connection request received from the router 60.

Having received the message, the connection control unit 121 of the connection adapter 1 starts processing of connection to the in-house LAN 50 on the basis of setting data stored in the setting data storage unit 151. More specifically, the connection control unit 121 delivers an "ATD9999" command to the communication module 20 (step S154). In response to this AT command, the communication module 20 initiates a call to the relaying equipment 41 in the radio packet communication network 40 (step S155). Upon receipt of a response "CONNECT" to the effect that connection has been completed at the line level via the communication module 20 (step S156), the connection control unit 121 of the connection adapter 1 starts processing to connect the connection adapter 1 to the in-house LAN 50 by PPP.

First, the connection control unit 121 of the connection adapter 1 starts an LCP negotiation with the relaying equipment 41 of the radio packet communication network 40 (step S157). The connection control unit 121 of the connection adapter 1 then performs PAP authentication with the relaying equipment 41 of the radio packet communication network 40 (step S158). Then, the connection control unit 121 of the connection adapter 1 starts an IPCP negotiation between the connection adapter 1 and the relaying equipment 41 of the radio packet communication network 40 (step S159). This results in completion of the IPCP negotiation, and a dynamic IP address of 172.16.0.X is assigned to the connection control unit 121 of the connection adapter 1 from the radio packet communication network 40. As stated above, the IP address assigned here is predetermined for the communication module 20, which is a connection terminal. The assigned dynamic IP address is stored in storage means such as an EPROM (not shown).

Upon completion of the PPP negotiation, a connection requesting packet arrives at the connection adapter 1 from the management computer 51 (step S160). As stated above, the radio packet communication network 40 discarded at step S151 the packet delivered from the management computer 51. Therefore, the management computer 51 is unable to receive the response to the connection requesting packet and retransmits a connection requesting packet owing to a timeout. Since the processing from steps S153 through S159 described above takes some time, some of the retransmitted packets further run into a timeout. Therefore, the connection requesting packet that arrives at the connection adapter 1 is the latest of the number of retransmitted packets.

The connection control unit 121 of the connection adapter 1, upon receipt of the connection requesting packet from the management computer 51, notifies the high-level equipment 10 of the call arrival (step S161). The high-level equipment 10, upon receipt of the notification of the call arrival, notifies the connection adapter 1 of the response to that notification of the call arrival (step S162), and starts an LCP negotiation and an IPCP negotiation (steps S163, S164). A point to be noted here is that the connection control unit 121 of the connection adapter 1 responds to the high-level equipment 10.

The connection control unit 121 of the connection adapter 1 transfers to the high-level equipment 10 the connection requesting packet received from the management computer 51 at step S160 (step S165). Having received the connection requesting packet, the high-level equipment 10 returns the response to the connection adapter 1 (step S166). The connection adapter 1 relays the response packet to the router 60 (step S167). The router 60 relays the response packet to the management computer 51 in accordance with the usual routing rules (step S168).

The foregoing processing causes the high-level equipment 10 to determine that connection to the management computer 51 has been completed, and starts data communication to the management computer 51 (step S169). Hereupon, the communication control unit 122 of the connection adapter 1 performs address conversion of the header of the IP packet (step S170). More specifically, as shown in Fig. 8, the fixed terminal IP address (172.168.0.1) and the dynamic terminal IP address (172.16.0.1) are converted into each other.

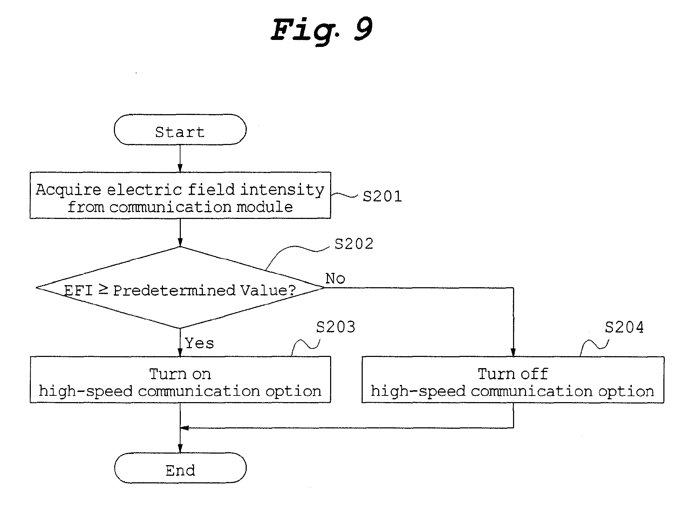

Next, control of the communication speed between the high-level equipment 10 and the management computer 51 at steps S111 and S169 will be described with reference to the flowchart shown in Fig. 9.

As shown in Fig. 9, the communication control unit 122 of the connection adapter 1 regularly acquires the present radio wave condition from the communication module 20 (step S201). The communication module 20 detects the present radio wave condition, or more specifically, the electric field intensity, and notifies the communication control unit 122 of the value of detected electric field intensity. The electric field intensity value notified here is represented on a scale of numerical values (e.g., integers from 0 to 3). If the electric field intensity value is equal to or greater than a predetermined value (e.g., 2), the communication control unit 122 controls the communication module 20 to turn on the high-speed option (steps S202 and S203). On the other hand, if the electric field intensity value is less than the predetermined value, the communication control unit 122 controls the communication module 20 to turn off the high-speed option (steps S202, S204).

In this way, the connection adapter 1 of this embodiment makes possible communication using the radio packet communication network 40, which the high-level equipment 10 did not originally presuppose, without having to remodel or alter the high-level equipment 10. Further, the connection adapter 1 of this embodiment controls the communication speed in the radio communication section in accordance with radio wave condition. More specifically, when the radio wave condition is good, communication is performed at a high speed, and when the radio wave condition is not good, communication is performed at a low speed. An experiment conducted by the applicant showed that, when the radio wave condition was not good, switching the communication speed in the radio communication section to a high speed sometimes resulted in lower throughput than when communication was set to a low speed. Therefore, the connection adapter 1 of this embodiment optimizes the communication speed in accordance with radio wave condition, thereby improving communication throughput.

### (Second Embodiment)

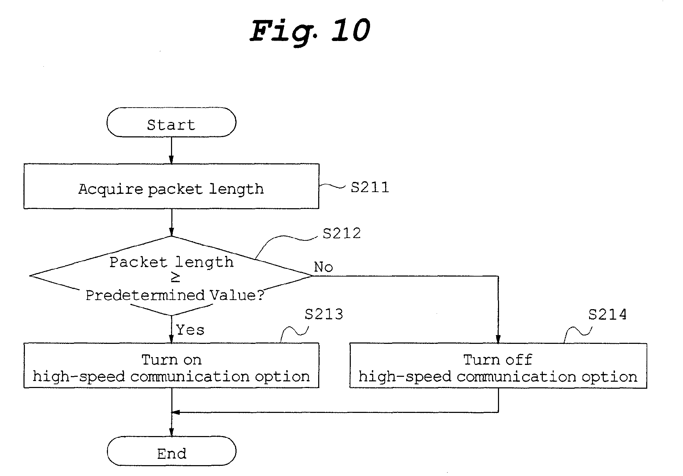

A communication system according to a second embodiment of the invention will be described with reference to drawings. The difference between the communication system of this embodiment and the system of the first embodiment is in the method by which the connection adapter 1 controls the communication speed. Other configurative aspects and operations are similar to the first embodiment. The communication speed controlling method in this embodiment will be described with reference to the flowchart shown in Fig. 10.

As shown in Fig. 10, the communication control unit 122 of the connection adapter 1 acquires and monitors the packet length of an IP packet which is received from the high-level equipment 10 and is to be delivered to the radio packet communication network 40 (step S211). If the packet length is equal to or greater than a predetermined value (e.g., 900 bytes), the communication control unit 122 controls the communication module 20 to turn on the high-speed option (steps S212, S213). On the other hand, if the packet length is less than the predetermined value, the communication control unit 122 controls the communication module 20 to turn off the high-speed option (steps S212, S214).

An experiment conducted by the applicant showed that, when the packet length in the radio communication section was small, switching the communication speed in the radio communication section to high-speed communication sometimes resulted in lower throughput than when communication was set to a low speed. Therefore, the connection adapter 1 of this embodiment optimizes the communication speed in accordance with packet length, thereby improving communication throughput. Other operations and advantages are similar to those provided in the first embodiment.

### (Third Embodiment)

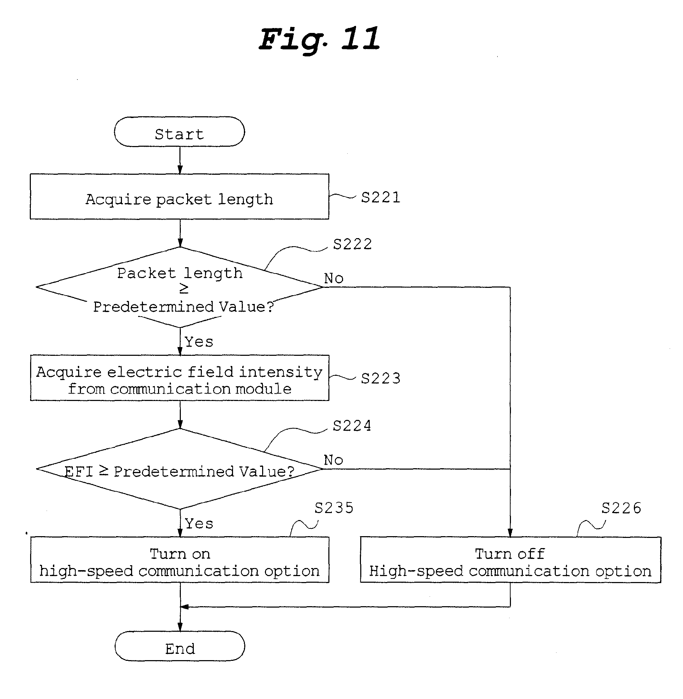

A communication system according to a third embodiment of the invention will be described with reference to drawings. The difference between the communication system of this embodiment and those of the first and second embodiments is in the method by which the connection adapter 1 controls the communication speed. Other configurative aspects and operations are similar to the first embodiment. The communication speed controlling method in this embodiment will be described with reference to the flowchart shown in Fig. 11.

In this embodiment, the communication speed is controlled by combination of the control based on radio wave condition described in the first embodiment and that based on packet length described in the second embodiment.

The communication control unit 122 of the connection adapter 1, as shown in Fig. 11, acquires and monitors the packet length of an IP packet that is received from the high-level equipment 10 and is to be delivered to the radio packet communication network 40 (step S221). Then, if the packet length is equal to or greater than a predetermined value (e.g., 900 bytes), the communication control unit 122 acquires the present radio wave condition from the communication module 20 (steps S222, S223). The communication module 20 detects the present radio wave condition, or more specifically, the electric field intensity, and notifies the communication control unit 122 of the electric field intensity value. If the electric field intensity value is equal to or greater than a predetermined value (e.g., 2), the communication control unit 122 controls the communication module 20 to turn on the high-speed option (step S224, S225). On the other hand, if the packet length is less than the predetermined value (step S222) or if the electric field intensity value is less than the predetermined value (step S224), the communication control unit 122 controls the communication module 20 to turn off the high-speed option (step S226).

The connection adapter 1 of this embodiment optimizes the communication speed in accordance with radio wave condition and packet length, thereby improving communication throughput. Other operations and advantages are similar to those provided in the first embodiment.

### (Fourth Embodiment)

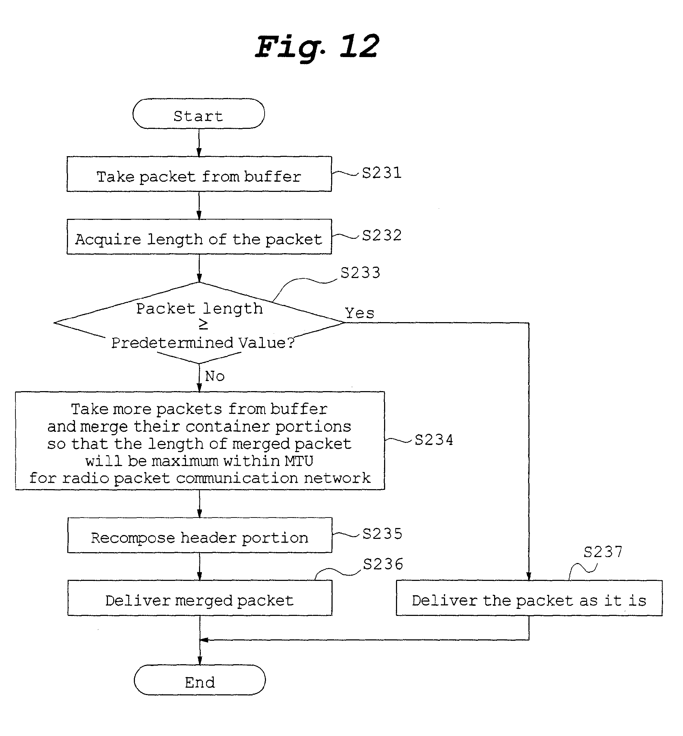

A communication system according to a fourth embodiment of the invention will be described with reference to drawings. The difference between the communication system of this embodiment and those of the first through third embodiments is in the means for improving throughput implemented by the connection adapter 1. In the embodiments described above, the connection adapter 1 performs control for switching the communication speed setting of the communication module 20 in accordance with various communication conditions. Meanwhile, this embodiment does not switch the communication speed setting of the communication module 20 but optimizes the packet length of IP packets in the radio communication section. More specifically, the communication control unit 122 of the connection adapter 1 is characterized in that it performs IP packet concatenation processing so that the length of an IP packet to be delivered to the radio packet communication network 40 will be the maximum within the MTU (Maximum Transmission Unit) for the radio packet communication network 40. Other configurative aspects and operations of this embodiment are similar to the first embodiment. Communication control in this embodiment will be described with reference to the flowchart shown in Fig. 12.

As shown in Fig. 12, the communication control unit 122 of the connection adapter 1 takes an IP packet from the head of the packet temporary storage unit 152 in which IP packets received from the high-level equipment 10 are buffered (step S231), and measures the length of the packet (step S232). If the packet length is less than a predetermined value (e.g., 900 bytes) (step S233), the communication control unit 122 performs packet concatenation processing, which will be described later (steps S234 through S256). However, if the packet length is equal to or greater than the predetermined value, the communication control unit 122 delivers the IP packet as it is to the radio packet communication network 40 (step S257).

In the packet concatenation processing, the communication control unit 122 takes one or more packets from the packet temporary storage unit 152 so that the length of a concatenated packet will be the maximum within the MTU for the radio packet communication network 40. The communication control unit 122 then merges the container portions of packets including the one taken at step S231 (step S254). Next, the communication control unit 122 recomposes the header portion of the IP packets (step S255), and delivers the merged IP packet onto the radio packet communication network 40 (step S256).

As stated in the third embodiment, an experiment conducted by the application showed that, when the packet length in the radio communication section is small, switching the communication speed within the radio communication section to high-speed communication sometimes resulted in lower throughput than when communication was set to a low speed. In this embodiment, on the other hand, since IP packets of small packet lengths do not flow onto the radio packet communication network 40, throughput is enhanced by setting the communication module 20 to high-speed communication. Other operations and advantages of this embodiment are similar to the first embodiment.

### (Fifth Embodiment)

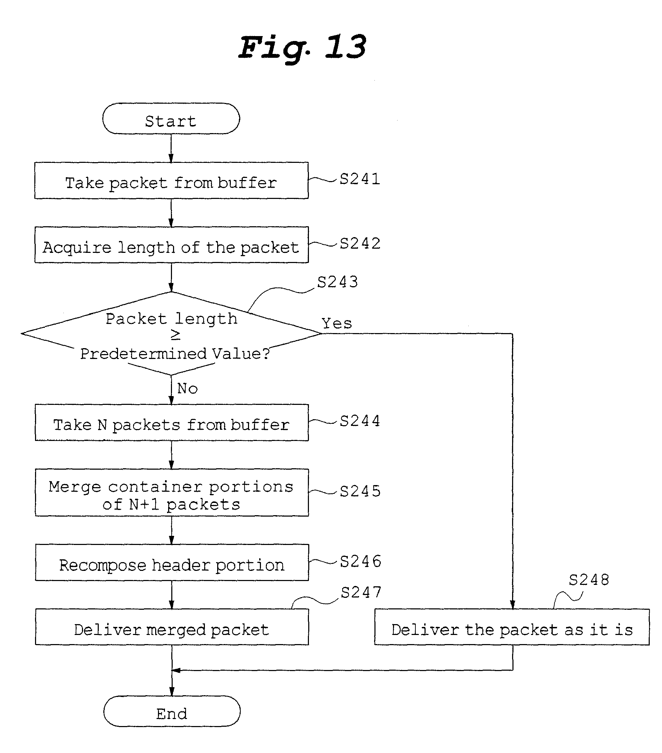

A communication system according to a fifth embodiment of the invention will be described with reference to drawings. The difference between the communication system of this embodiment and the system of the fourth embodiment is in the method by which the communication control unit 122 of the connection adapter 1 performs packet concatenation processing. Other configurative aspects and operations are similar to the fourth embodiment. Communication control in this embodiment will be described with reference to the flowchart shown in Fig. 13.

As shown in Fig. 13, the communication control unit 122 of the connection adapter 1 takes an IP packet from the head of the packet temporary storage unit 152 in which IP packets received from the high-level equipment 10 are buffered (step S241), and measures the length of the packet (step S242). If the packet length is less than a predetermined value (e.g., 900 bytes) (step S243), the communication control unit 122 performs packet concatenation processing, which will be described later (steps S244 through S247). On the other hand, if the packet length is equal to or greater than the predetermined value, the communication control unit 122 delivers the IP packet as it is to the radio packet communication network 40 (step S248).

In the packet concatenation processing, the communication control unit 122 takes a predetermined number (N) of IP packets from the packet temporary storage unit 152 (step S244), and merges the container portions of N+1 packets including the one taken at step S241 (step S245). Next, the communication control unit 122 recomposes the header portion of the IP packets (step S246), and delivers the merged IP packet to the radio packet communication network 40 (step S247).

In this embodiment, since IP packets of small packet lengths do not flow onto the radio packet communication network 40, throughput is enhanced by setting the communication module 20 to high-speed communication, as in the fourth embodiment. In addition, as processing of packet concatenation is simplified compared to the fourth embodiment, it is possible to enhance processing speed. Other operations and advantages of this embodiment are similar to the first embodiment.

Although the present invention has been so far described in detail with respect to the embodiments thereof, the invention is not limited to those embodiments. For instance, while the embodiments above concerned a telemetering system for monitoring the sewage flow rate, the present invention is applicable to other telemetering and telematics systems as well.

Also, the embodiments described above illustrated a communication module of the CDMA standards, the invention can be also implemented with communication modules of other standards. Similarly, other interface standards than those cited above can also be applied at the high-level equipment side.

## Claims

1. A connection adapter for communication devices, comprising:
a first interface (124) for connection to a communication device (20) for use in a radio packet communication network (40);
a second interface (123) for connection to high-level equipment (10) which performs communication utilizing TCP/IP by using said communication device (20);
a connection controller (121) which controls the connection between said high-level equipment (10) and said radio packet communication network (40); and
a communication controller (122) which relays communication by said high-level equipment (10) using said communication device (20); wherein:
said communication controller (122) monitors radio wave condition detected by the communication device (20), and controls the communication device (20) to switch the communication speed in the radio packet communication network (40) based on the radio wave condition.

2. The connection adapter for communication devices according to claim 1, wherein:
said communication controller (122) controls the communication device (20) to increase the communication speed when radio field intensity is equal to or greater than a predetermined value.

3. A connection adapter for communication devices, comprising:
a first interface (124) for connection to a communication device (20) for use in a radio packet communication network (40);
a second interface (123) for connection to high-level equipment (10) which performs communication utilizing TCP/IP by using said communication device (20);
a connection controller (121) which controls the connection between said high-level equipment (10) and said radio packet communication network (40); and
a communication controller (122) which relays communication by said high-level equipment (10) using said communication device (20); wherein:
said communication controller (122) monitors the length of IP packets transmitted from the high-level equipment (10) to the radio packet communication network (40), and controls the communication device (20) to switch the communication speed in the radio packet communication network (40) based on the packet length.

4. The connection adapter for communication devices according to claim 3, wherein:
said communication controller (122) controls the communication device (20) to increase the communication speed when the packet length is equal to or greater than a predetermined value.

5. A connection adapter for communication devices, comprising:
a first interface (124) for connection to a communication device (20) for use in a radio packet communication network (40);
a second interface (123) for connection to high-level equipment (10) which performs communication utilizing TCP/IP by using said communication device (20);
a connection controller (121) which controls the connection between said high-level equipment (10) and said radio packet communication network (40);
a communication controller (122) which relays communication by said high-level equipment (10) using said communication device (20) ; and
a storage (152) which temporarily stores IP packets to be transmitted to the radio packet communication network (40) from the high-level equipment (10); wherein:
said communication controller (122), when the length of an IP packet stored in said storage (152) is equal to or greater than a predetermined value, delivers the IP packet to the radio packet communication network (40), and when the length of the IP packet is less than the predetermined value, concatenates the IP packet and one or more other IP packets stored in said storage (152) so that the length of the concatenated packet is equal to or greater than the predetermined value, and delivers the concatenated IP packet to the radio packet communication network (40).

6. The connection adapter for communication devices according to claim 5, wherein:
said communication controller (122) performs IP packet concatenation processing so that the packet length of a concatenated IP packet will be the maximum within the MTU (Maximum Transmission Unit) for the radio packet communication network (40).

7. The connection adapter for communication devices according to claim 5, wherein:
said communication controller (122) concatenates a predetermined number of IP packets.
